# EUROPÄISCHE PATENTANMELDUNG

(11) **EP 0 655 536 A1**
(43) Veröffentlichungstag der Anmeldung: **31.05.1995**
(21) Anmeldenummer: 94117509.3
(22) Anmeldetag: 06.11.1994
(51) Int. Cl.: E03F 7/06, A01M 23/00

(54) **Vorrichtung zum Zurückhalten von Ratten oder dgl. in einer Abwasserleitung**

(30) Priorität: 09.11.1993 DE 9317099 U
(71) Anmelder: Pütz, Wilhelm, D-52525 Heinsberg (DE)
(72) Erfinder: Pütz, Wilhelm, D-52525 Heinsberg (DE)

(57) **Zusammenfassung**

Bei einer Vorrichtung zum Zurückhalten von Ratten od. dgl. in einer Abwasserleitung ist vorgesehen, daß ein in einen vertikal verlaufenden Bereich der Abwasserleitung in diese einsetzbares und in seinem Innenquerschnitt entsprechend der Abwasserleitung ausgebildetes Rohrstück im Bereich außerhalb seiner Rohrwand angeordnete Schwenklagerungen für eine Mehrzahl von über den Umfang des Rohrstückes verteilten, Öffnungen in dem Rohrstück durchfassenden, stabförmigen Sperrgliedern aufweist. Die stabförmigen Sperrglieder sind in Gebrauchslage in einer der Kontur eines Trichters bzw. Kegels entsprechenden Formation schräg nach unten und nach innen, aufeinander zu weisend und einzeln in Richtung auf die Innenwand des Rohrstückes um die Schwenklagerungen entgegen der Wirkung einer Vorspannkraft verschwenkbar angeordnet. Damit wird einerseits der Zutritt von Ratten oder ähnlichen Tieren entgegen der Strömungsrichtung sicher verhindert. Andererseits tritt für den Abwasserdurchfluß keine merkbare Querschnittsverringerung auf, wodurch die Gefahr eines Verstopfens verringert bzw. ausgeschaltet wird.

## Beschreibung

Die Erfindung betrifft eine Vorrichtung zum Zurückhalten von Ratten od. dgl. in einer Abwasserleitung.

Mit derartigen Vorrichtungen wird bezweckt, einerseits den Zutritt von Ratten oder anderen Tieren von einem in Strömungsrichtung des Abwassers unterhalb dieser Vorrichtung liegenden Bereich in einen oberhalb dieser Vorrichtung liegenden Bereich zu verhindern. Bei bekannten derartigen Vorrichtungen sind Schwenkeinrichtungen vorgesehen, welche einen Durchfluß in Strömungsrichtung ermöglichen, andererseits aber entgegen der Strömungsrichtung sperren, so daß Ratten diese Vorrichtung entgegen der Strömungsrichtung nicht überwinden können. Die Lagerungen der Schwenkklappen oder anderweitigen Hemmeinrichtungen sind bei bekannten Vorrichtungen im Inneren des Rohres angebracht. Hierdurch wird der lichte Querschnitt verringert, was einen ungehinderten Durchfluß in Strömungsrichtung erschwert. Darüber hinaus kann es im Laufe der Zeit dazu kommen, daß sich im Abwasser befindliche Feststoffe an den Schwenkeinrichtungen bzw. deren Lagerungen ansammeln, wodurch der Querschnitt mehr und mehr verkleinert wird und schlimmstenfalls das Abwasserrohr verstopft.

Der Erfindung liegt die Aufgabe zugrunde, eine Vorrichtung der eingangs genannten Art zu schaffen, welche einerseits den Zutritt von Ratten oder ähnlichen Tieren entgegen der Strömungsrichtung sicher verhindert und bei der andererseits durch das Vorhandensein der Vorrichtung keine merkbare Querschnittsverringerung für den Abwasserdurchfluß auftritt und außerdem die Gefahr eines Verstopfens verringert bzw. ausgeschaltet wird.

Zur Lösung dieser Aufgabe ist erfindungsgemäß vorgesehen, daß ein in einen vertikal verlaufenden Bereich der Abwasserleitung in diese einsetzbares und in seinem Innenquerschnitt entsprechend der Abwasserleitung ausgebildetes Rohrstück im Bereich außerhalb seiner Rohrwand angeordnete Schwenklagerungen für eine Mehrzahl von über den Umfang des Rohrstückes verteilten Öffnungen in dem Rohrstück durchfassenden, stabförmigen Sperrgliedern aufweist, und die stabförmigen Sperrglieder in Gebrauchslage in einer der Kontur eines Trichters bzw. Kegels entsprechenden Formation schräg nach unten und nach innen aufeinander zuweisend und einzeln in Richtung auf die Innenwand des Rohrstückes um die Schwenklagerungen entgegen der Wirkung einer Vorspannkraft verschwenkbar angeordnet sind.

Hierbei ist vorteilhaft, daß die Verschwenkvorrichtung für die stabförmigen Sperrglieder außerhalb des Durchflußquerschnittes angeordnet ist, so daß sich keine in dem Abwasser vorhandenen Feststoffe an den Schwenkeinrichtungen ansetzen können und dementsprechend die Gefahr eines allmählichen Verstopfens nicht besteht. Da die Sperrglieder stabförmig ausgebildet sind, findet durch das Vorhandensein der Sperrglieder keine praktisch merkbare Querschnittsverengung statt. Es versteht sich, daß die Anzahl und die gegenseitigen Abstände der stabförmigen Sperrglieder so gewählt werden, daß in Gebrauchslage die zwischen den einzelnen stabförmigen Sperrgliedern und eine zwischen den Stirnenden verbleibende Mittelöffnung so klein sind, daß Ratten oder andere Tiere zurückgehalten werden.

Ein weiterer Vorteil besteht darin, daß ein Öffnen des aus stabförmigen Sperrgliedern bestehenden "Absperrtrichters" nur dann erfolgt, wenn das Abwasser in Strömungsrichtung feste Materialien mit sich führt, welche dann die stabförmigen Sperrglieder entgegen ihrer vorspannkraft verschwenken, bis der Feststoff die Vorrichtung passiert hat. Anschließend schwenken die stabförmigen Sperrglieder wieder in ihre Gebrauchslage zurück. Solange das Abwasser lediglich flüssige Bestandteile aufweist, ist ein ungehinderter Durchfluß möglich, ohne daß die aus stabförmigen Sperrgliedern bestehende Sperrvorrichtung bewegt werden müßte.

Ein weiterer Vorteil besteht darin, daß die stabförmigen Sperrglieder jeweils für sich gelenkig gelagert und rückstellbar ausgebildet sind, wodurch in dem Fall, daß wider Erwarten die Schwenkfunktion bzw. Rückstellfunktion eines stabförmigen Sperrgliedes defekt ist, die Funktion der übrigen stabförmigen Sperrglieder hiervon unberührt bleibt, so daß insgesamt die Funktion der Vorrichtung durch die den Ausfall der Funktion eines oder mehrerer stabförmiger Sperrglieder nicht in Frage gestellt wird.

In zweckmäßiger Ausgestaltung der Erfindung kann weiterhin vorgesehen sein, daß die Schwenklagerungen in einem den Rohrkörper ringförmig umschließenden Hohlraum angeordnet sind, und daß der Hohlraum zusätzlich zu den Öffnungen zu den stabförmigen Sperrglieder in seinem in Gebrauchslage unteren Bereich Abflußöffnungen aufweist.

In zweckmäßiger Ausgestaltung der Erfindung ist weiterhin vorgesehen, daß die stabförmigen Sperrglieder durch die Wirkung von an außerhalb des Rohrstückes angeordneten Verlängerungen angebrachten Gewichten in Gebrauchslage unter Vorspannung gehalten sind. Dies erscheint gegenüber grundsätzlich möglichen Federanordnungen oder Gummianordnungen zur Erzeugung der Vorspannkraft auch über lange Zeiträume ohne Wartung funktionssicher.

Schließlich kann erfindungsgemäß vorgesehen sein, daß die stabförmigen Sperrglieder auf doppelt gelagerten Schwenkachsen gelagert sind, und die Schwenkachsen jeweils zwischen den Seiten der Sperrglieder und den Innenseiten der Schwenkachsenlagerungen angeordnete Scheiben aufweisen. Bei einer Verschwenkbewegung stützen sich die vorzugsweise fest mit den stabförmigen Sperrgliedern verbundenen Scheiben gegen die Innenseiten der Schwenkachsenlagerungen ab und verhindern dadurch ein Kippen bzw. Verkanten der Sperrelemente bei der Verschwenkbewegung. Eine Ausführung der stabförmigen Sperrglieder und der Schwenkeinrichtungen in Edelstahl ermöglicht einen wartungsfreien Langzeitbetrieb.

Die Erfindung wird nachfolgend anhand des in den Zeichnungen dargestellten Ausführungsbeispiels näher erläutert. Es zeigen:
- Fig. 1: einen Längsschnitt durch eine in einen vertikal verlaufenden Bereich einer Abwasserleitung eingesetzten Vorrichtung gemäß der Erfindugn;
- Fig. 2: einen Schnitt längs der Linie II-II in Fig. 1;
- Fig. 3: einen Schnitt durch eines der Schwenklager in vergrößertem Maßstab.

In einen vertikal verlaufenden Bereich 1 einer Abwasserleitung ist ein Rohrstück 2 eingesetzt. Die Stirnenden 2 und 3 des Rohrstückes 2 grenzen an Stirnenden 1a und 1b der Abwasserleitung an. Die Befestigung und Abdichtung erfolgt mittels schematisch dargestellter Schellen 4 und 5, welche innenseitig jeweils eine Gummidichtung aufweisen. Die Strömungsrichtung des in der Abwasserleitung strömenden Mediums ist mit A bezeichnet.

Das Rohrstück 2 weist außenseitig ein ringförmig angeordnetes Schutzrohr 6 mit Stirnenden 7 und 8 auf. Auf diese Weise ist das Rohrstück 2 im Bereich außerhalb des mit 10 bezeichneten Teilstückes seiner Rohrwand von einem ringförmigen Hohlraum 9 umschlossen. Die Stirnwand 7 weist Schwenklagerungen 12 für eine Mehrzahl über den Umfang des Rohrstückes 2 verteilt angeordnete stabförmige Sperrglieder 13 auf. Die Sperrglieder 13 sind durch längsschlitzartige Öffnungen 14 in dem Rohrstück 2 durchgeführt und weisen sich an die Schwenklagerungen 12 anschließende, gegenüber der Längsrichtung der Sperrglieder umgewinkelte Verlängerungen 15 mit daran angebrachten Gewichten 16 auf. Die Lagerung der stabförmigen Sperrglieder 13 in den Schwenklagern 12 erfolgt jeweils auf doppelt gelagerten Schwenkachsen 17, welche in sich an das Stirnende 7 anschließenden Schwenkachsenlagerungen 18 und 19 angebracht sind. Zwischen den Innenseiten der Schwenkachsenlagerungen 18 und 19 und den Sperrgliedern 13 sind jeweils Scheiben 20 vorgesehen, durch deren Wirkung ein Kippen bzw. Verkanten der Sperrglieder 13 verhindert wird.

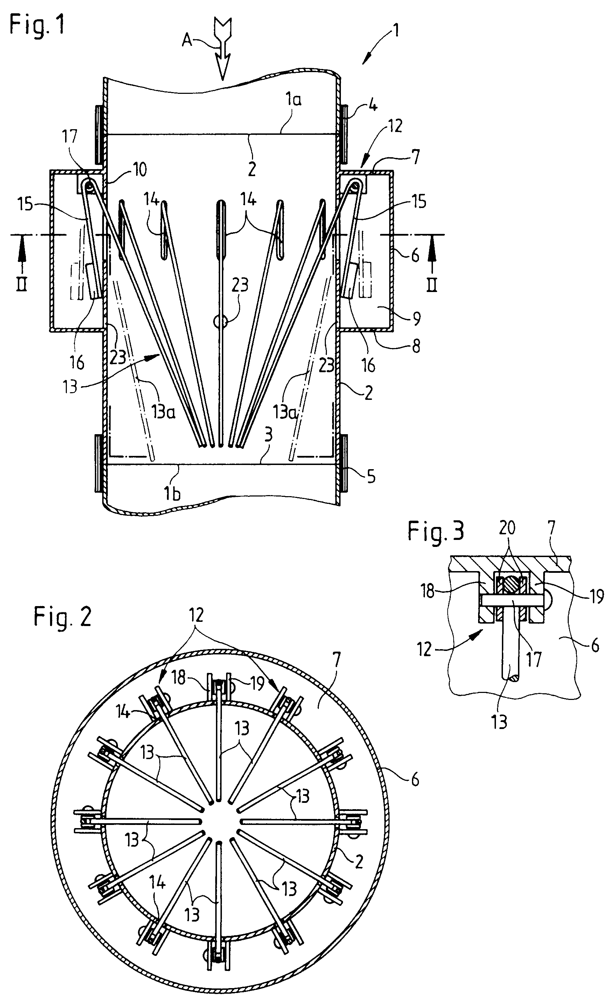

Wie ersichtlich, weisen die stabförmigen Sperrglieder 13 in der in Fig. 1 und Fig. 2 dargestellten Gebrauchslage die Kontur eines Trichters bzw. Kegels auf. Die zwischen den einander zugewandten Stirnenden der Sperrglieder verbleibende Innenöffnung 21 des Trichters bzw. Kegels sowie die zwischen den Sperrgliedern 13 in Gebrauchslage vorhandenen Abstände sind so bemessen, daß Ratten oder ähnliche Tiere in der Abwasserleitung 1 entgegen der Strömungsrichtung A die Vorrichtung nicht überwinden können. Soweit das Abwasser ausschließlich flüssige Bestandteile aufweist, stellen die stabförmigen Sperrglieder in der in Fig. 1 und Fig. 2 gezeigten Gebrauchslage, bei der sie innerhalb des Rohrstückes 2 so verschwenkt sind, daß ihre jeweiligen Stirnenden aufeinander zugerichtet sind, kein Hindernis für das Abwasser dar. Wenn in dem Abwasser Feststoffe enthalten sind, werden die Sperrglieder 13 durch Wirkung derartiger Feststoffe in die in Fig. 1 strichpunktiert gezeigte Stellung 13a verschwenkt, wodurch die Mittelöffnung 21 vergrößert wird und der Feststoff passieren kann. Nach dem Passieren des Feststoffes schwenken die stabförmigen Sperrglieder durch Wirkung der Gewichte 16 selbsttätig wieder in die in ausgezogenen Linien dargestellte Gebrauchslage zurück.

Um ggf. in den Hohlraum eindringendes Abwasser ablaufen zu lassen, sind in seinem in Gebrauchslage unteren Bereich Abflußöffnungen 23 vorgesehen.

## Patentansprüche

1. Vorrichtung zum Zurückhalten von Ratten od. dgl. in einer Abwasserleitung, dadurch gekennzeichnet, daß ein in einen vertikal verlaufenden Bereich der Abwasserleitung in diese einsetzbares und in seinem Innenquerschnitt entsprechend der Abwasserleitung ausgebildetes Rohrstück (2) im Bereich außerhalb seiner Rohrwand (10) angeordnete Schwenklagerungen (12) für eine Mehrzahl von über den Umfang des Rohrstückes verteilten, Öffnungen (14) in dem Rohrstück durchfassenden, stabförmigen Sperrgliedern (13) aufweist, und die stabförmigen Sperrglieder in Gebrauchslage in einer der Kontur eines Trichters bzw. Kegels entsprechenden Formation schräg nach unten und nach innen, aufeinander zu weisend und einzeln in Richtung auf die Innenwand des Rohrstückes um die Schwenklagerungen entgegen der Wirkung einer Vorspannkraft verschwenkbar angeordnet sind.

2. Vorrichtung nach Anspruch 1, dadurch gekennzeichnet, daß die Schwenklagerungen (12) in einem das Rohrstück (2) ringförmig umschließenden Hohlraum (9) angeordnet sind, und daß der Hohlraum (9) zusätzlich zu den Öffnungen (14) für die stabförmigen Sperrglieder (13) in seinem in Gebrauchslage unteren Bereich Abflußöffnungen (23) aufweist.

3. Vorrichtung nach Anspruch 1 oder 2, dadurch gekennzeichnet, daß die stabförmigen Sperrglieder (13) durch die Wirkung von an außerhalb des Rohrstückes (2) angeordneten Verlängerungen (15) angebrachten Gewichten (16) in Gebrauchslage unter Vorspannung gehalten sind.

4. Vorrichtung nach einem der Ansprüche 1 bis 3, dadurch gekennzeichnet, daß die stabförmigen Sperrglieder (13) auf doppelt gelagerten Schwenkachsen (17) gelagert sind und die Schwenkachsen jeweils zwischen den Seiten der Sperrglieder (13) und den Innenseiten der Schwenkachsenlagerungen (18, 19) angeordnete Scheiben (20) aufweisen.
